# EUROPEAN PATENT APPLICATION

(11) **EP 3 875 546 A1**
(43) Date of publication of application: **08.09.2021**
(21) Application number: 21160882.3
(22) Date of filing: 05.03.2021
(51) Int. Cl.: C09D 5/18, C09D 7/45, C09D 7/61, C09D 7/63, C09D 133/02, C08K 5/02, C08K 5/053, C08K 5/3492, C08K 3/22, C08K 3/32

(54) **FIRE PROTECTION AND RETARDANT COATINGS**

(30) Priority: 05.03.2020 GB 202003164
(71) Applicant: Intumescent Systems Ltd, Dover Kent CT15 7JG (GB)
(72) Inventor: Ward, Derek, Dover, Kent CT15 7JG (GB)
(74) Representative: Fry, David John

(57) **Abstract**

An intumescent water-based coating whose composition comprises defined ranges by weight of water, melamine, monopentaerythritol, ammonium polyphosphate, acrylic copolymer, propylene glycol, antifoam, biocide, water soluble polycarboxylate, titanium dioxide, chlorinated paraffin, coalescent additive, and styrene acrylic copolymer.

## Description

### Field of the Invention

This invention relates to fire protection/ retardant coatings and more especially to such coatings for metallic, particularly steel surfaces.

### Background to the invention

Intumescent containing fire protection coatings are known but many fail to meet the criteria imposed by various Governmental bodies that the coating remains in place to prevent the passage of fire and smoke for a minimum period of 30 minutes. Typical of such requirements are those set by the European SPI test. Coatings in accordance with this invention have been found to exceed this minimum time period.

### Summary of the Invention

The invention provides an intumescent water-based coating whose composition comprises between 18.54 and 22.66% by weight water, between 7.83 and 9.57% by weight melamine, between 8.55 and 10.45% by weight monopentaerythritol, between 23.67 and 28.93% by weight ammonium polyphosphate, between 0.27 and 0.33% by weight acrylic copolymer, between 0.90 and 1.10 by weight propylene glycol, between 0.10 and 0.20% by weight antifoam, between 0.09 and 1.01% by weight biocide, between 0.45 and 0.55% by weight water soluble polycarboxylate, between 7.2 and 8.8% by weight titanium dioxide, between 4.32 and 5.28% by weight chlorinated paraffin, between 2.88 and 3.52% by weight coalescent additive, and between 14.85 and 18.15% by weight styrene acrylic copolymer.

Preferably, the water content of the coating composition is 20.60% by weight.

Preferably the melamine content of the coating composition is 8.70% by weight.

Preferably the monopentaerythritol content of the coating composition is 9.50% by weight.

Preferably the ammonium polyphosphate content of the composition is 26.3% by weight.

Preferably the acrylic copolymer content of the composition is 0.30% by weight.

Preferably the propylene glycol content of the composition is 1.00% by weight.

Preferably the antifoam content of the composition is 0.20% by weight.

Preferably the biocide content of the composition is 0.1% by weight.

Preferably the water-soluble polycarboxylate content of the composition is 0.50% by weight.

Preferably the titanium dioxide content of the composition is 8.0% by weight.

Preferably the chlorinated paraffin content of the composition is 4.8% by weight.

Preferably the coalescent additive content of the composition is 3.2%.

Preferably the styrene acrylic copolymer content of the composition is 16.50% by weight.

### Detailed description of the invention

The invention sets out to produce a fire proofed protective coating particularly for products or structures produced from metallic materials such as steel and the like. A method of producing a preferred coating in accordance with the invention will now be described.

The chemical composition of the coating to be produced is as follows: by weight, 20.6% water; 8.7% of blowing agent melamine; 9.50% of carbon donor monopentaerythritol; 26.3% of acid donor ammonium polyphosphate; 0.30% of thickener acrylic copolymer; 1.00% propylene glycol to control freeze/thaw protection for the finished coating; 0.20% antifoam to control foaming of the coating; 0.10% biocide to preserve the coating; 0.50% water soluble polycarboxylate to assist disbursement of pigments and fillers; 8.0% titanium dioxide to provide a white finish to the coating; 4.80% of char enhancer chlorinated paraffin; 3.20% of coalescent solvent additive; and 16.50% styrene acrylic copolymer to bind the coating.

The method of production comprises the sequential steps of mixing together in a suitable vessel 15.1% by weight of the water and the above-mentioned quantities of melamine, monopentaerythritol, ammonium polyphosphate and acrylic copolymer.

Once thoroughly mixed, an additional 2.69% by weight of water together with the specified quantities of antifoam, biocide, water soluble polycarboxylate and surfactants are added to the vessel and thoroughly mixed for a further period of approximately 10 minutes.

The vessel is then scraped down and the mixing process continued for a period approximating to 10 minutes after which the specified quantity of titanium dioxide is added to the vessel and the vessel contents thoroughly mixed for a further period of approximately 10 minutes.

The chlorinated paraffin and coalescent additive are then mixed together and added to the contents of the vessel.

Finally, the styrene acrylic copolymer and the final 2.82% water are added to the vessel after which the vessel contents are thoroughly mixed for 15 minutes or until composition uniformity has been achieved.

The coating is then filtered as required.

As mentioned, the coating is particularly appropriate for providing a fireproofed long-lasting coating for steel and like products. The coating provides protection against fire for 2 hours.

Furthermore, coatings in accordance with the invention provide improved adhesion and moisture resistance properties together with enhanced fire protection.

It will be appreciated that the foregoing is merely explanatory of coatings in accordance with the invention and that modifications can readily be made without departing from the scope of the invention as set out in the appended claims.

## Claims

1. An intumescent water-based coating whose composition comprises between 18.54 and 22.66% by weight water, between 7.83 and 9.57% by weight melamine, between 8.55 and 10.45% by weight monopentaerythritol, between 23.67 and 28.93% by weight ammonium polyphosphate, between 0.27 and 0.33% by weight acrylic copolymer, between 0.90 and 1.10% by weight propylene glycol, between 0.10 and 0.20% by weight antifoam, between 0.090 and 1.01% by weight biocide, between O.45 and 0.55% by weight water soluble polycarboxylate, between 7.2 and 8.84% by weight titanium dioxide, between 4.32 and 5.28% by weight chlorinated paraffin, between 2.88 and 3.52% by weight coalescent additive, and between 14.85 and 18.15% by weight styrene acrylic copolymer.

2. A coating as claimed in claim 1 wherein the water content of the coating composition is 20.60% by weight.

3. A coating as claimed in either one of the preceding claims wherein the melamine content of the coating composition is 8.70% by weight.

4. A coating as claimed in any one of claims 1 to 3 wherein the monopentaerythritol content of the coating composition is 9.50% by weight.

5. A coating as claimed in any of claims 1 to 4 wherein the ammonium polyphosphate content of the composition is 26.3% by weight.

6. A coating as claimed in any one of claims 1 to 5 wherein the acrylic copolymer content of the composition is 0.30% by weight.

7. A coating as claimed in any one of claims 1 to 6 wherein the propylene glycol content of the composition is 1.00% by weight.

8. A coating as claimed in any one of claims 1 to 7 wherein the antifoam content of the composition is 0.20%.

9. A coating as claimed in any one of claims 1 to 8 wherein the biocide content of the composition is 0.10% by weight.

10. A coating as claimed in any preceding claim wherein the water-soluble polycarboxylate content of the composition is 0.50% by weight.

11. A coating as claimed in any preceding claim wherein the titanium dioxide content of the composition is 8.00% by weight.
